# EUROPEAN PATENT APPLICATION

(11) **EP 4 611 381 A1**
(43) Date of publication of application: **03.09.2025**
(21) Application number: 23894244.5
(22) Date of filing: 20.09.2023
(51) Int. Cl.: H04N 23/10, G01J 3/02, G01J 3/18, G01J 3/36, G01N 21/27, G01N 21/85, H04N 25/44, H04N 25/70

(54) **PHOTODETECTOR, CAMERA AND IMAGING SYSTEM**

(30) Priority: 22.11.2022 JP 2022186302
(71) Applicant: Hamamatsu Photonics K.K., Hamamatsu-shi, Shizuoka 435-8558 (JP)
(72) Inventor: SUZUKI Hiroya, Hamamatsu-shi, Shizuoka 435-8558 (JP); YABASHI Ryo, Hamamatsu-shi, Shizuoka 435-8558 (JP); MORITA Sho, Hamamatsu-shi, Shizuoka 435-8558 (JP)
(74) Representative: Boult Wade Tennant LLP
(86) International application number: PCT/JP2023/034113
(87) International publication number: WO 2024/111232

(57) **Abstract**

A photodetector includes a plurality of photodetection substrates having sensitivities in mutually different wavelength ranges, and a circuit board on which the plurality of photodetection substrates are placed so as to be aligned in a column direction. The plurality of photodetection substrates include a plurality of photodetection portions arranged in a row direction and the column direction. The circuit board includes a plurality of pixel circuits electrically connected to the plurality of photodetection portions, respectively, a row selection circuit for selecting a row from which signals are read from among the plurality of pixel circuits, and a column reading circuit for reading signals from the plurality of pixel circuits in the selected row for each column. The row selection circuit is configured to be able to select any row from among a plurality of rows of the plurality of pixel circuits.

## Description

### Technical Field

One aspect of the present disclosure relates to a photodetector, a camera, and an imaging system.

### Background Art

Patent Literature 1 below describes a hyperspectral imaging device. In hyperspectral imaging, when an object is captured, not only a shape of the object but also spectral information thereof is acquired, and two-dimensional (2D) image information for each wavelength is obtained. When the 2D image information for each wavelength is used, inspection, etc. of the object, which could not be achieved by an RGB image, can be achieved.

### Citation List

### Patent Literature

Patent Literature 1: U.S. Patent No. 10,274,368

### Summary of Invention

### Technical Problem

Inspection, etc. based on hyperspectral imaging may require high-speed processing. For this reason, there is demand for high-speed processing in hyperspectral imaging.

Therefore, an object of one aspect of the disclosure is to provide a photodetector, a camera, and an imaging system capable of increasing speed of hyperspectral imaging processing.

### Solution to Problem

A photodetector according to an aspect of the disclosure is [1] "a photodetector including a plurality of photodetection substrates having sensitivities in mutually different wavelength ranges, and a circuit board on which the plurality of photodetection substrates are placed, wherein each of the plurality of photodetection substrates includes a plurality of photodetection portions arranged in a row direction and a column direction perpendicular to the row direction, the plurality of photodetection substrates are placed on the circuit board so as to be aligned in the column direction, the circuit board includes a plurality of pixel circuits arranged in the row direction and the column direction and electrically connected to the plurality of photodetection portions, respectively, a row selection circuit for selecting a row from which signals are read from among the plurality of pixel circuits, and a column reading circuit for reading signals from the plurality of pixel circuits in the row selected by the row selection circuit for each column, and the row selection circuit is configured to be able to select any row from among a plurality of rows of the plurality of pixel circuits."

In this photodetector, the plurality of photodetection substrates having sensitivities in mutually different wavelength ranges are placed on the circuit board, and each of the photodetection substrates includes the plurality of photodetection portions arranged in the row direction and the column direction. In addition, the plurality of photodetection substrates are placed on the circuit board so as to be aligned in the column direction. In this way, for example, 2D image information for each wavelength can be acquired by causing light dispersed in the column direction by a dispersion element to enter the photodetection portions of each photodetection substrate (by arranging the photodetector so that the column direction is aligned with a spectral direction). In addition, in this photodetector, the row selection circuit for selecting a row from which a signal is read from among the plurality of pixel circuits are configured to be able to select any row from among a plurality of rows of the plurality of pixel circuits. In this way, it is possible to read signals from pixel circuits in a necessary row while not reading signals from pixel circuits in an unnecessary row. In hyperspectral imaging, inspection, etc. can be performed using only a detection result for a specific wavelength range. For this reason, by reading only signals from pixel circuits in a necessary row, it is possible to increase a processing speed when compared to, for example, reading pixel circuits of all rows in sequence. Therefore, this photodetector can increase a processing speed of hyperspectral imaging.

A photodetector according to an aspect of the disclosure may be [2] "the photodetector according to [1], further including a controller, wherein the controller controls the row selection circuit so that signals are read from the plurality of pixel circuits in a row corresponding to input, while signals are not read from the plurality of pixel circuits in a row other than the row corresponding to the input". In this case, for example, a processing speed can be increased when compared to a case where the pixel circuits in all the rows are read in sequence.

A photodetector according to an aspect of the disclosure may be [3] "the photodetector according to [1] or [2], wherein the plurality of photodetection substrates include a first photodetection substrate and a second photodetection substrate, and the second photodetection substrate is adjacent to the first photodetection substrate in the column direction with a first gap therebetween". In this case, for example, a processing speed can be further increased by arranging the photodetector so that light in a wavelength range not required for inspection, in the light dispersed in the column direction by the spectroscopic portion, enters the first gap. In addition, the photodetection substrates can be made smaller, and manufacture can be facilitated.

A photodetector according to an aspect of the disclosure may be [4] "the photodetector according to [3], wherein a plurality of non-connected pixel circuits not electrically connected to the plurality of photodetection substrates are arranged in a region of the circuit board overlapping with the first gap when viewed in a thickness direction of the circuit board". In this case, for example, it is possible to change arrangement of the photodetection substrates so that the photodetection portions are electrically connected to the non-connected pixel circuits, and to increase a degree of freedom.

A photodetector according to an aspect of the disclosure may be [5] "the photodetector according to [4], wherein capacitors of the plurality of non-connected pixel circuits are reset when capacitors of the plurality of pixel circuits are reset". Since the photodetection portions are not connected to the non-connected pixel circuits, no signal is accumulated therein. However, there is a case in which electric charges generated at a PN junction due to entrance of the light are accumulated therein. In this case, there is concern that the electric charges may act as a parasitic capacitor and affect the surrounding pixel circuits. In this regard, in the photodetector, when the capacitor of the pixel circuit is reset, the capacitor of the non-connected pixel circuit is reset, so that it is possible to suppress an influence of the electric charges accumulated in the non-connected pixel circuit on the surrounding pixel circuits.

A photodetector according to an aspect of the disclosure may be [6] "the photodetector according to [4], wherein capacitors of the plurality of non-connected pixel circuits are constantly in a reset state". In this case, it is possible to more reliably suppress an influence of the electric charges accumulated in the non-connected pixel circuit on the surrounding pixel circuits.

A photodetector according to an aspect of the disclosure may be [7] "the photodetector according to [3], wherein no pixel circuit is arranged in a region of the circuit board overlapping with the first gap when viewed in a thickness direction of the circuit board". In this case, for example, when compared to the case where the non-connected pixel circuits are arranged in the region, it is possible to reduce the amount of current supplied to the pixel circuit, and to suppress heat generation in the pixel circuit. In addition, by suppressing heat generation in the pixel circuit, it is possible to suppress generation of dark current in the photodetection substrates.

A photodetector according to an aspect of the disclosure may be [8] "the photodetector according to [3], wherein the plurality of photodetection substrates further include a third photodetection substrate, the third photodetection substrate is adjacent to the second photodetection substrate in the column direction with a second gap therebetween, and a length of the first gap in the column direction is different from a length of the second gap in the column direction". In this case, for example, a processing speed can be further increased by arranging the photodetector so that light in a wavelength range not required for inspection, in the light dispersed in the column direction by the spectroscopic portion, enters the second gap. In addition, the photodetection substrates can be made smaller, and manufacture can be facilitated.

A photodetector according to an aspect of the disclosure may be [9] "the photodetector according to any one of [1] to [8], wherein the column reading circuit includes a plurality of output ports electrically connected to mutually different columns of the plurality of pixel circuits". In this case, a signal reading speed can be improved.

A photodetector according to an aspect of the disclosure may be [10] "the photodetector according to any one of [1] to [9], wherein the number of the plurality of pixel circuits arranged in the row direction is greater than the number of the plurality of pixel circuits arranged in the column direction". In this case, a signal reading speed can be improved.

A photodetector according to an aspect of the disclosure may be [11] "the photodetector according to any one of [1] to [10], wherein each of the plurality of pixel circuits includes a charge amplifier electrically connected to one of the plurality of photodetection portions". In this case, the electric charges generated in the photodetection portions can be converted into a voltage signal by the charge amplifier.

A photodetector according to an aspect of the disclosure may be [12] "the photodetector according to any one of [1] to [11], wherein the row selection circuit is configured to be switchable between a first state in which any row is selectable from among a plurality of rows of the plurality of pixel circuits, and a second state in which a plurality of rows of the plurality of pixel circuits are selected in sequence according to an arrangement order in the column direction". In this case, it is possible to switch states of the row selection circuit depending on the use, etc.

A photodetector according to an aspect of the disclosure may be [13] "the photodetector according to any one of [1] to [12], wherein the plurality of photodetection substrates include a first photodetection substrate having sensitivity in a first wavelength range and a second photodetection substrate having sensitivity in a second wavelength range, and a part of the first wavelength range overlaps with the second wavelength range". In this case, it is possible to realize the photodetector not having a wavelength range in which detection sensitivity significantly drops while obtaining a wide detection range.

A camera according to an aspect of the disclosure is [14] "a camera including a light entrance portion, a spectroscopic portion configured to disperse light entering from the light entrance portion, and a photodetector that detects the light dispersed by the spectroscopic portion, wherein the photodetector includes a plurality of photodetection portions arranged in a row direction and a column direction perpendicular to the row direction, a plurality of pixel circuits arranged in the row direction and the column direction and electrically connected to the plurality of photodetection portions, respectively, a row selection circuit for selecting a row from which signals are read from among the plurality of pixel circuits, and a column reading circuit for reading signals from the plurality of pixel circuits in the row selected by the row selection circuit for each column, the row selection circuit is configured to be able to select any row from among a plurality of rows of the plurality of pixel circuits, and the spectroscopic portion disperses the light in the column direction".

In this camera, the spectroscopic portion disperses the light in the column direction. That is, the photodetector is arranged so that the row direction aligns with a spectral direction. Further, in the photodetector, the row selection circuit for selecting a row from which a signal is read from among the plurality of pixel circuits are configured to be able to select any row from among a plurality of rows of the plurality of pixel circuits. In this way, it is possible to read signals from pixel circuits in a necessary row while not reading signals from pixel circuits in an unnecessary row. In hyperspectral imaging, inspection, etc. can be performed using only a detection result for a specific wavelength range. For this reason, by reading only signals from pixel circuits in a necessary row, it is possible to increase a processing speed when compared to, for example, reading pixel circuits of all rows in sequence. Therefore, this camera can increase a processing speed of hyperspectral imaging.

A camera according to an aspect of the disclosure may be [15] "the camera according to [14], further including a slit extending in the row direction, wherein the light passing through the slit enters the spectroscopic portion". In this case, it is possible to cause light to favorably enter the spectroscopic portion.

A camera according to an aspect of the disclosure may be [16] "the camera according to [14] or [15], wherein the photodetector includes a plurality of photodetection substrates having sensitivities in mutually different wavelength ranges, and a circuit board on which the plurality of photodetection substrates is placed, each of the plurality of photodetection substrates includes a plurality of photodetection portions arranged in the row direction and the column direction, the plurality of photodetection substrates is placed on the circuit board so as to be aligned in the column direction, and the circuit board includes the plurality of pixel circuits, the row selection circuit, and the column reading circuit". In this case, it is possible to favorably acquire 2D image information for each wavelength.

An imaging system according to an aspect of the disclosure is [17] "an imaging system including the camera according to any one of [14] to [16], and a conveying device that conveys an object in the column direction, wherein light from the object being conveyed by the conveying device enters the light entrance portion". According to this imaging system, for the above-described reason, it is possible to increase a processing speed of hyperspectral imaging. In addition, as described above, since the photodetector of this imaging system can read only signals from pixel circuits in a necessary, it is possible to process the light from the object conveyed in the column direction by the conveying device at high speed.

### Advantageous Effects of Invention

According to an aspect of the disclosure, it is possible to provide a photodetector, a camera, and an imaging system capable of increasing speed of hyperspectral imaging processing.

### Brief Description of Drawings

[FIG. 1] FIG. 1 is a drawing illustrating a configuration of an imaging system according to an embodiment.
[FIG. 2] FIG. 2 is a perspective view of a photodetector.
[FIG. 3] FIG. 3 is a diagram illustrating arrangement of pixel circuits in a circuit board.
[FIG. 4] FIG. 4 is a diagram illustrating a configuration of a circuit portion of the circuit board.
[FIG. 5] FIG. 5 is a drawing for describing a reading region in the photodetector.
[FIG. 6] FIG. 6 is a diagram illustrating a configuration of a row selection circuit.
[FIG. 7] FIG. 7 is a diagram illustrating a configuration of a multiplexer illustrated in FIG. 6.
[FIG. 8] FIG. 8 is a timing chart illustrating an operation of the row selection circuit.
[FIG. 9] FIG. 9 is a diagram for describing a flow of a signal on the circuit board.
[FIG. 10] FIG. 10 is a diagram illustrating the row selection circuit in a sequential reading mode.
[FIG. 11] FIG. 11 is a timing chart illustrating an operation of the row selection circuit in the sequential reading mode.
[FIG. 12] FIG. 12 is a diagram illustrating a configuration of a non-connected pixel circuit according to a first modified example.
[FIG. 13] FIG. 13 is a diagram illustrating arrangement of pixel circuits on a circuit board according to a second modified example.

### Description of Embodiments

Hereinafter, embodiments of the disclosure will be described in detail with reference to the drawings. Note that, in each drawing, the same or corresponding parts are denoted by the same reference numerals, and duplicated description will be omitted.

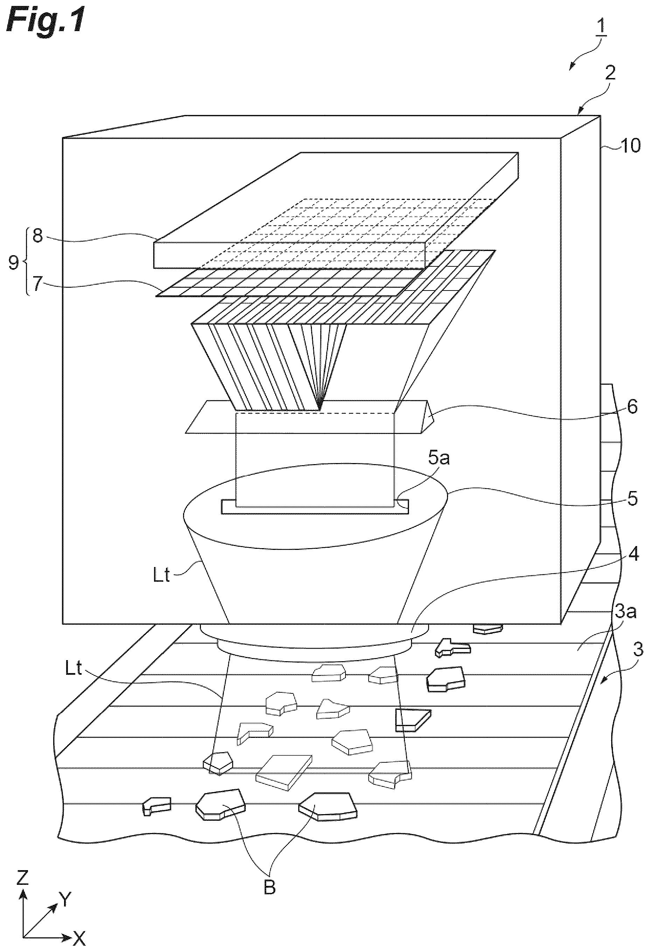

As illustrated in FIG. 1, an imaging system 1 (hyperspectral imaging system) includes a camera 2 (hyperspectral imaging camera) and a conveying device 3. In the imaging system 1, the camera 2 captures light Lt from an object B being conveyed by the conveying device 3, and hyperspectral imaging is performed. In hyperspectral imaging, when the object B is captured, not only a shape of the object B but also spectral information thereof is acquired, and 2D image information for each wavelength is acquired. In the imaging system 1, for example, the object B is food, and food sorting (inspection) is performed based on the spectral information. The following description will be given by setting an X-direction, a Y-direction, and a Z-direction perpendicular to one another as illustrated in FIG. 1, etc.

The camera 2 includes a light entrance portion 4, a slit portion 5, a spectroscopic portion 6, a photodetector 9, and a housing 10. The slit portion 5, the spectroscopic portion 6, and the photodetector 9 are arranged inside the housing 10. The housing 10 is formed of, for example, an opaque material. However, in FIG. 1, the housing 10 is illustrated as being transparent to facilitate understanding.

The light entrance portion 4 is a portion that causes the light Lt from the object B to enter the housing 10. The light entrance portion 4 is configured to include, for example, a lens, and guides the light Lt from the object B toward the slit portion 5 while condensing the light by the lens. The camera 2 is arranged, for example, vertically above the conveying device 3 so that the light entrance portion 4 faces the conveying device 3 in the Z-direction. That is, in this example, the Z-direction is a vertical direction. A slit 5a is formed in the slit portion 5. The slit 5a is formed, for example, in a rectangular shape and extends straight in the X-direction. The light Lt entering from the light entrance portion 4 passes through the slit 5a and enters the spectroscopic portion 6.

In this example, the spectroscopic portion 6 is a transmission type diffraction grating that extends straight in the X-direction. The spectroscopic portion 6 is arranged to face the slit 5a in the Z-direction. The spectroscopic portion 6 disperses the light Lt from the slit 5a in the Y-direction. That is, the spectroscopic portion 6 disperses the light Lt so that a wavelength continuously changes depending on the position in the Y-direction (output angle).

The photodetector 9 detects the light Lt dispersed by the spectroscopic portion 6. As described later, the photodetector 9 is an area image sensor having a planar photodetection region (a region in which photodetection portions 71a to 73a described later are arranged) extending in the X-direction and the Y-direction. In the camera 2, the light Lt extending in the X-direction that has passed through the slit 5a is dispersed in the Y-direction by the spectroscopic portion 6 and enters the photodetection region of the photodetector 9. At an entrance position to the photodetection region, the light Lt becomes planar light whose wavelength is uniform in the X-direction and continuously changes in the Y-direction. By detecting this light Lt using the photodetector 9, 2D image information for each wavelength can be acquired.

In this example, the conveying device 3 is a belt conveyor and includes an endless belt 3a. The conveying device 3 conveys the object B placed on the endless belt 3a in the Y-direction by sending the endless belt 3a in the Y-direction. When the object B is inspected (when the imaging system 1 is in operation), the light Lt from the object B being conveyed by the conveying device 3 enters the light entrance portion 4 and is detected by the photodetector 9. In this way, the object B can be captured while changing a position in the Y-direction (scan photography), and the entire object B can be captured. In the imaging system 1, a conveying direction of the object B by the conveying device 3, a spectral direction of the light Lt by the spectroscopic portion 6, and an arrangement direction of the photodetection substrates 71 to 73 are all the Y-direction. Note that, in this example, the imaging system 1 further includes a light source (not illustrated) that irradiates light toward the object B, and the light Lt includes reflected light emitted from the light source and reflected by the object B. However, the light source may be omitted.

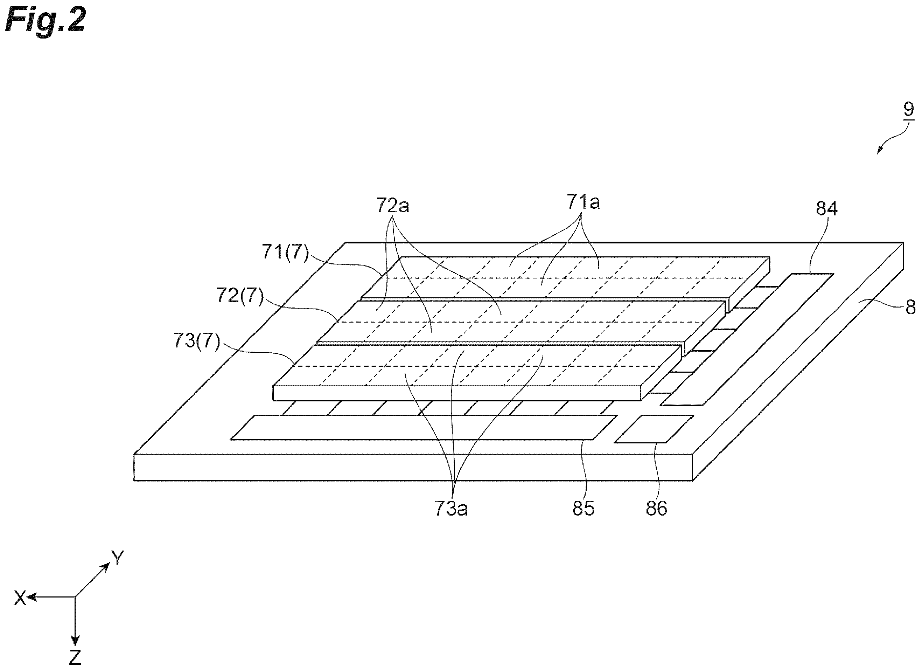

As illustrated in FIG. 2, the photodetector 9 includes a plurality of photodetection substrates 7 and a circuit board 8. The plurality of photodetection substrates 7 include a first photodetection substrate 71, a second photodetection substrate 72, and a third photodetection substrate 73. The photodetection substrates 71 to 73 are photodetection chips formed of, for example, InGaAs, and are semiconductor substrates on which a plurality of photodetection portions 71a to 73a are fabricated. The photodetection substrates 71 to 73 are placed on the circuit board 8 so as to be aligned in the Y-direction. Each of the photodetection substrates 71 to 73 is formed, for example, in a rectangular plate shape having long sides parallel to the X-direction. In this example, the photodetection substrates 71 to 73 have mutually the same shapes.

The first photodetection substrate 71 includes a plurality of first photodetection portions 71a, the second photodetection substrate 72 includes a plurality of second photodetection portions 72a, and the third photodetection substrate 73 includes a plurality of third photodetection portions 73a. Each of the photodetection portions 71a to 73a is, for example, a photodiode, and generates an electric charge according to the amount of entering light. Each of the photodetection substrates 71 to 73 is, for example, a 2D photodiode array in which photodiodes are two-dimensionally arranged in a lattice shape in a row direction and a column direction perpendicular to the row direction. In this example, the row direction is parallel to the X-direction, and the column direction is parallel to the Y-direction.

The plurality of first photodetection portions 71a are two-dimensionally arranged in a lattice shape in the row direction and the column direction. Even though the figure is simplified, in practice, for example, 320 first photodetection portions 71a are arranged in the row direction (X-direction) and about several tens of first photodetection portions 71a are arranged in the column direction (Y-direction). Similarly, the plurality of second photodetection portions 72a are arranged in the row direction and the column direction, and the plurality of third photodetection portions 73a is arranged in the row direction and the column direction. In this example, the numbers of the second photodetection portions 72a and the third photodetection portions 73a arranged in the row direction and the column direction are the same as the number of the first photodetection portions 71a.

The photodetection substrates 71 to 73 (photodetection portions 71a to 73a) have sensitivities in mutually different wavelength ranges. For example, the first photodetection portions 71a have sensitivity in a first wavelength range of 0.95 to 1.65 µm, the second photodetection portions 72a have sensitivity in a second wavelength range of 1.3 to 2.15 µm, and the third photodetection portions 73a have sensitivity in a third wavelength range of 1.7 to 2.55 µm (all values are at -20°C). In this way, in this example, a part of the first wavelength range overlaps with the second wavelength range, and a part of the second wavelength range overlaps with the third wavelength range. A wavelength range having sensitivity is defined as a wavelength range having sensitivity of 10% or more of maximum sensitivity. Specifically, the wavelength having the maximum sensitivity is set to λp, and sensitivity at λp (maximum sensitivity) is set to S(λp). In this case, a wavelength range in which sensitivity S is S(λp) × 0.1 or more is defined as a sensitive wavelength range. On the other hand, a wavelength range in which sensitivity is less than S(λp) × 0.1 is defined as having no sensitivity.

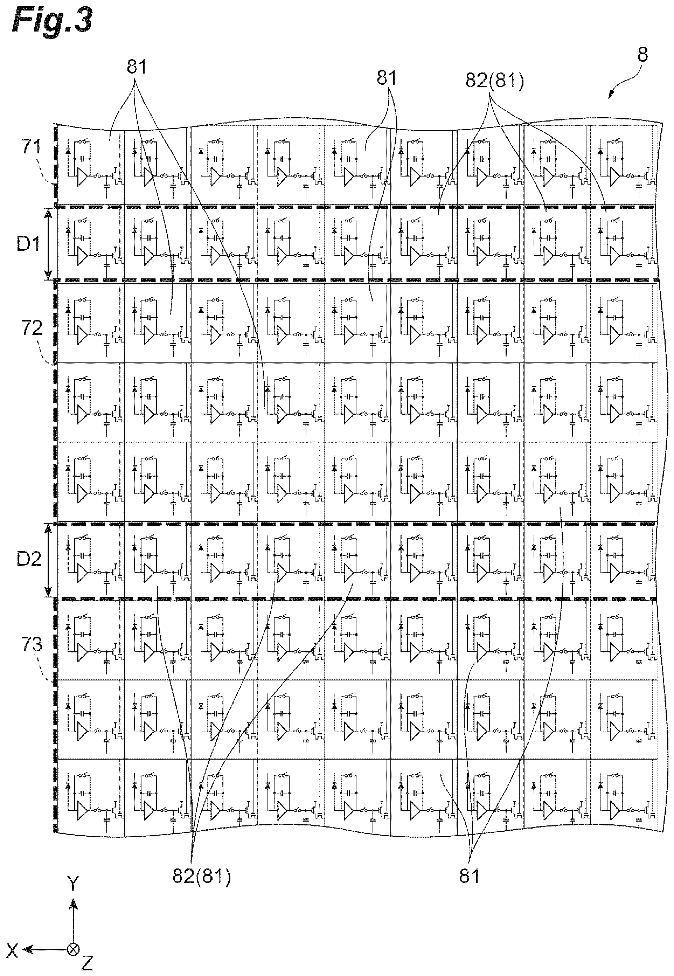

The circuit board 8 includes a plurality of pixel circuits 81 (see FIG. 3). For example, the circuit board 8 is an IC chip made of Si, and is a semiconductor substrate on which the pixel circuits 81, a row selection circuit 84, a column reading circuit 85, and a control circuit 86, which will be described later, are fabricated.

The plurality of pixel circuits 81 are two-dimensionally arranged in a lattice shape in the row direction (X-direction) and the column direction (Y-direction). Although the figure is simplified, in practice, for example, 320 pixel circuits 81 are arranged in the row direction and 256 pixel circuits 81 are arranged in the column direction. Thus, in this example, the number of pixel circuits 81 arranged in the row direction is greater than the number of pixel circuits 81 arranged in the column direction. In this example, the number of pixel circuits 81 arranged in the row direction is equal to the number of first photodetection portions 71a arranged in the row direction. The number of pixel circuits 81 arranged in the column direction is greater than the number of first photodetection portions 71a arranged in the column direction.

The plurality of pixel circuits 81 are electrically connected to the photodetection portions 71a to 73a. This point will be described with reference to FIG. 3. As illustrated in FIG. 3, the first photodetection substrate 71, the second photodetection substrate 72, and the third photodetection substrate 73 are placed on the circuit board 8 so as to be aligned in the Y-direction with gaps therebetween. More specifically, the second photodetection substrate 72 is adjacent to the first photodetection substrate 71 with a first gap D1 in the Y-direction, and the third photodetection substrate 73 is adjacent to the second photodetection substrate 72 with a second gap D2 in the Y-direction. In this example, a length of the first gap D1 in the Y-direction is equal to a length of the second gap D2 in the Y-direction.

The first photodetection substrate 71, the second photodetection substrate 72, and the third photodetection substrate 73 are electrically connected to the pixel circuits 81 located immediately below. That is, the photodetection portions 71a to 73a of the photodetection substrates 71 to 73 are electrically connected to pixel circuits 81 arranged in regions overlapping with the photodetection substrates 71 to 73 when viewed in the Z-direction (thickness direction of the circuit board 8) (direction perpendicular to the X-direction and the Y-direction). For example, one photodetection portion 71a and one pixel circuit 81 are electrically connected by a connection member such as a bump or solder. In this example, the one photodetection portion 71a and the one pixel circuit 81 are connected by the connection member while facing each other (flip-chip bonding). Similarly, the photodetection portions 71a to 73a are electrically connected to the corresponding pixel circuits 81 in a one-to-one relationship. In this way, electric charges generated in the photodetection portions 71a to 73a can be converted into voltage signals by the pixel circuits 81. A configuration of the pixel circuits 81 will be described later.

As described above, since there is a gap (first gap D1 or second gap D2) among the photodetection substrates 71 to 73, some of the pixel circuits 81 are not electrically connected to the photodetection substrates 71 to 73. Hereinafter, the pixel circuits 81 not electrically connected to the photodetection substrates 71 to 73 are referred to as non-connected pixel circuits 82. The non-connected pixel circuits 82 are arranged in a region of the circuit board 8 that overlaps with the first gap D1 and a region of the circuit board 8 that overlaps with the second gap D2 when viewed in the Z-direction (thickness direction of the circuit board 8). A configuration of the non-connected pixel circuits 82 is the same as that of the pixel circuits 81 electrically connected to the photodetection substrates 71 to 73.

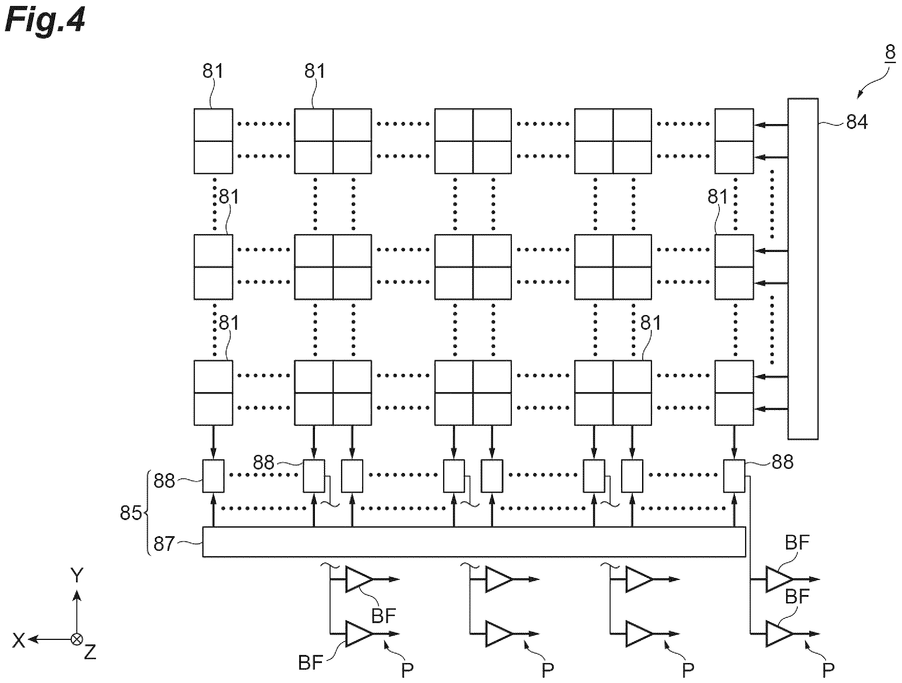

As illustrated in FIGS. 2 and 4, the circuit board 8 further includes the row selection circuit 84 (vertical transfer circuit), the column reading circuit 85 (horizontal transfer circuit), and the control circuit 86 (controller). The row selection circuit 84 selects a row from which signals are read from among the plurality of pixel circuits 81. The column reading circuit 85 reads signals from a plurality of pixel circuits 81 in the row selected by the row selection circuit 84 for each column. The control circuit 86 is electrically connected to the row selection circuit 84 and the column reading circuit 85, and controls operations of the row selection circuit 84 and the column reading circuit 85. The control circuit 86 is, for example, a timing generator.

In the photodetector 9, the row selection circuit 84 is configured to be able to select any row (specific row) from among a plurality of rows of the plurality of pixel circuits 81. That is, in the photodetector 9, it is possible to select and read a specific row from among the plurality of rows of the plurality of pixel circuits 81 (selective reading function). In this way, it is possible to read signals from pixel circuits 81 in a necessary row while not reading signals from pixel circuits 81 in an unnecessary row. In hyperspectral imaging, inspection, etc. can be performed using only a detection result for a specific wavelength range. For this reason, by reading only the signals from the pixel circuits 81 in the necessary row, for example, it is possible to increase processing speed when compared to reading all the rows of the pixel circuits 81 in sequence.

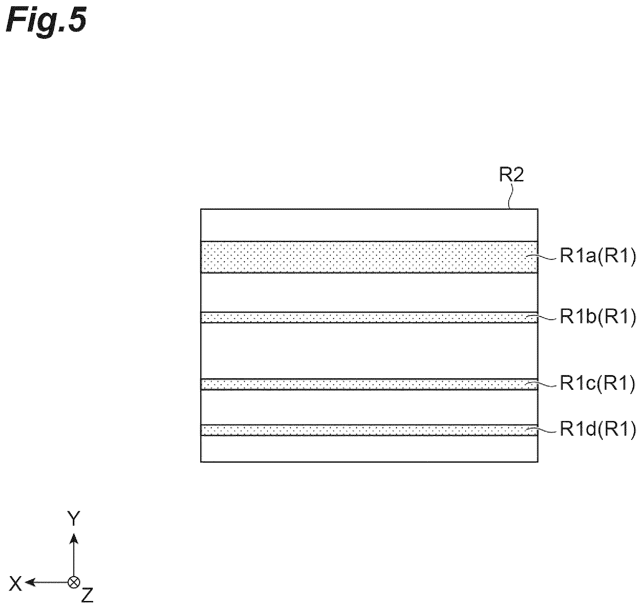

FIG. 5 is a drawing for describing an example of a reading region R1 in the photodetector 9. FIG. 5 illustrates a region R2 in which the pixel circuits 81 are arranged on the circuit board 8. In the photodetector 9, instead of sequentially reading all the rows of the pixel circuits 81 in the region R2, only rows of pixel circuits 81 included in the reading region R1 are sequentially read. In hyperspectral imaging, inspection, etc. can be performed using only a detection result for a specific wavelength range. For this reason, it is unnecessary to acquire data for a wavelength range other than the specific wavelength range. Therefore, by setting the reading region R1 to a region corresponding to the specific wavelength range, it is possible to read only signals from the pixel circuits 81 in the necessary row, and to increase processing speed.

The reading region R1 may be appropriately set depending on the type of inspection, etc. In the example of FIG. 5, the reading region R1 includes a plurality of (four in this example) regions R1a, R1b, R1c, and R1d arranged in the Y-direction. In this example, the region R1a is a region corresponding to ten rows of pixel circuits 81, and the regions R1b to R1d are regions corresponding to one row of pixel circuits 81. Between the adjacent regions R1a to R1d, for example, there are about ten rows of regions (rows from which signals are not read). The reading region R1 may be set, for example, according to input from a user. For example, the control circuit 86 sets the reading region R1 based on input from the user. That is, the control circuit 86 may control the row selection circuit 84 so that signals are read from a plurality of pixel circuits 81 in a row corresponding to the input, while signals are not read from a plurality of pixel circuits 81 in a row other than the row corresponding to the input.

A specific circuit configuration will be described with reference to FIG. 4 and FIGS. 6 to 9. First, an outline of the circuit configuration will be described with reference to FIG. 4. The row selection circuit 84 is, for example, a vertical shift register, arranged in the Y-direction, and electrically connected to the pixel circuits 81 of each row. The column reading circuit 85 includes a column selection circuit 87 and a plurality of signal processing circuits 88. The column selection circuit 87 is, for example, a horizontal shift register, arranged in the X-direction, and electrically connected to the pixel circuits 81 of each column via the signal processing circuits 88.

The column reading circuit 85 includes a plurality of (four in this example) output ports P electrically connected to mutually different columns of a plurality of pixel circuits 81. For example, when 320 pixel circuits 81 are arranged in the row direction (X-direction), the four output ports P are electrically connected to 80 mutually different columns of the pixel circuits 81. Each output port P includes a pair of buffer amplifiers BF electrically connected to a signal processing circuit 88, and a final signal is output from the output port P to the outside. When signals are read, first, the row selection circuit 84 selects one row. Subsequently, the column reading circuit 85 reads signals from a plurality of pixel circuits 81 in the corresponding row for each column via the signal processing circuit 88. The read signals are output to the outside from an output port P to which pixel circuits 81 in the corresponding column are electrically connected. This series of signal reading processes is performed for each row included in the above-mentioned reading region R1.

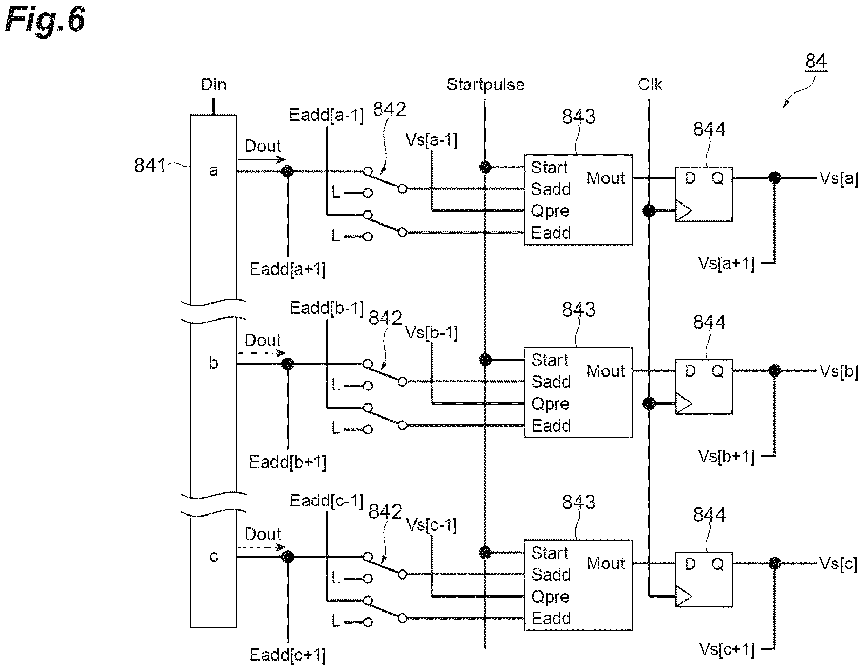

A configuration of the row selection circuit 84 will be described with reference to FIGS. 6 to 8. As illustrated in FIG. 6, the row selection circuit 84 includes a decoder 841, a plurality of multiplexers 843, and a plurality of D flip-flops 844. The number of multiplexers 843 and the number of D flip-flops 844 are the same as the number of rows of the pixel circuits 81. The multiplexers 843 are connected to the decoder 841 via mode changeover switches 842.

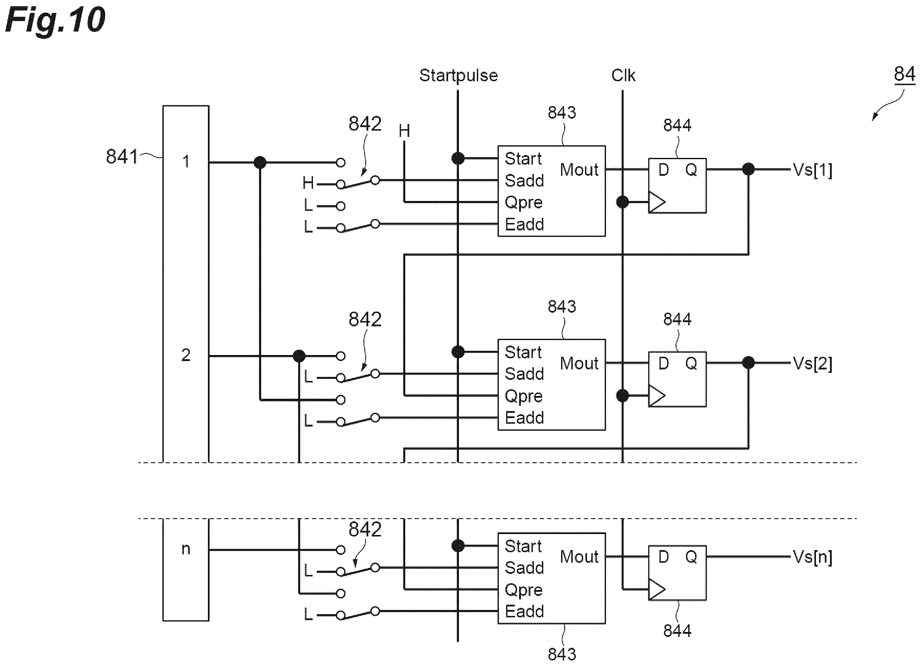

As described below, in the photodetector 9, the row selection circuit 84 is configured to be able to switch between a first state in which any row can be selected from among the plurality of rows of the plurality of pixel circuits 81, and a second state in which the plurality of rows of the plurality of pixel circuits 81 are selected in sequence according to an arrangement order in the Y-direction. That is, the photodetector 9 can operate in two modes, namely, a selective reading mode in which the row selection circuit 84 is in the first state, and a sequential reading mode in which the row selection circuit 84 is in the second state. The state of the row selection circuit 84 is switched by the mode changeover switches 842. In this example, when the mode changeover switches 842 are connected to the decoder 841 as illustrated in FIG. 6, the row selection circuit 84 is in the first state, and when the mode changeover switches 842 are not connected to the decoder 841 as illustrated in FIG. 10, the row selection circuit 84 is in the second state.

Hereinafter, first, a description will be given of an operation in the selective reading mode in which the row selection circuit 84 is in the first state. FIG. 6 illustrates an example in which three rows a, b, and c are read in sequence. The rows a, b, and c are not consecutive rows, but may be consecutive rows.

A row designation signal Din for designating a row to be read is input from the control circuit 86 to the decoder 841. The decoder 841 is connected to the multiplexer 843 of each row.

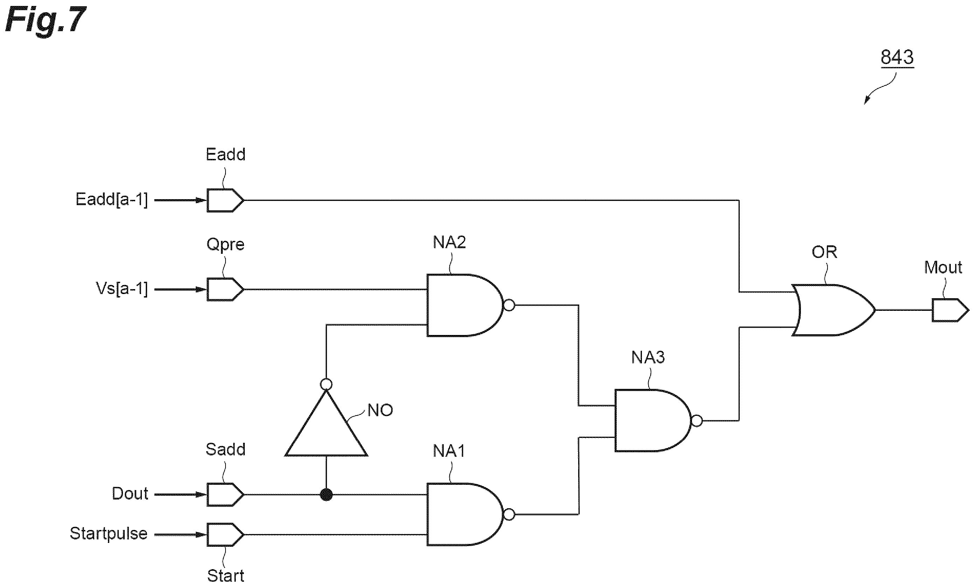

As illustrated in FIGS. 6 and 7, each multiplexer 843 includes an input terminal Start, an input terminal Sadd, an input terminal Qpre, an input terminal Eadd, and an output terminal Mout. A start signal Startpulse is input to the input terminal Start from the control circuit 86. The input terminal Sadd is connected to the decoder 841 via the mode changeover switch 842, and in the selective reading mode, an output signal Dout from the decoder 841 is input to the input terminal Sadd. A row selection signal Vs of a previous row is input to the input terminal Qpre. For example, a row selection signal Vs[a-1] of an (a-1)th row is input to an input terminal Qpre of an a-th row. A signal of an input terminal Eadd of the previous row is input to the input terminal Eadd. For example, a signal Eadd[a-1] of the input terminal Eadd of the previous row is input to an input terminal Eadd of the a-th row.

As illustrated in FIG. 7, each multiplexer 843 includes a NOT element NO, three NAND elements NA1 to NA3, and an OR element OR. When a signal at the input terminal Sadd is at a high level, a signal at the same level as that of the start signal Startpulse input to the input terminal Start appears at output of the NAND element NA3. On the other hand, when the signal at the input terminal Sadd is at a low level, a signal at the same level as that of a signal input to the input terminal Qpre appears at the output of the NAND element NA3. In the OR element OR, the signal appearing at the output of the NAND element NA3 and the signal at the input terminal Eadd are OR-processed. An output signal is output from the output terminal Mout. Note that, for example, a high level (H) is the same potential as a power supply voltage, and a low level (L) is the same potential as a ground voltage.

As illustrated in FIG. 6, each of the D flip-flops 844 includes an input terminal D, a clk terminal, and an output terminal Q. The input terminal D is connected to the output terminal Mout of the multiplexer 843. A clock signal Clk is input to the clk terminal from the control circuit 86. The row selection signal Vs is output from the output terminal Q.

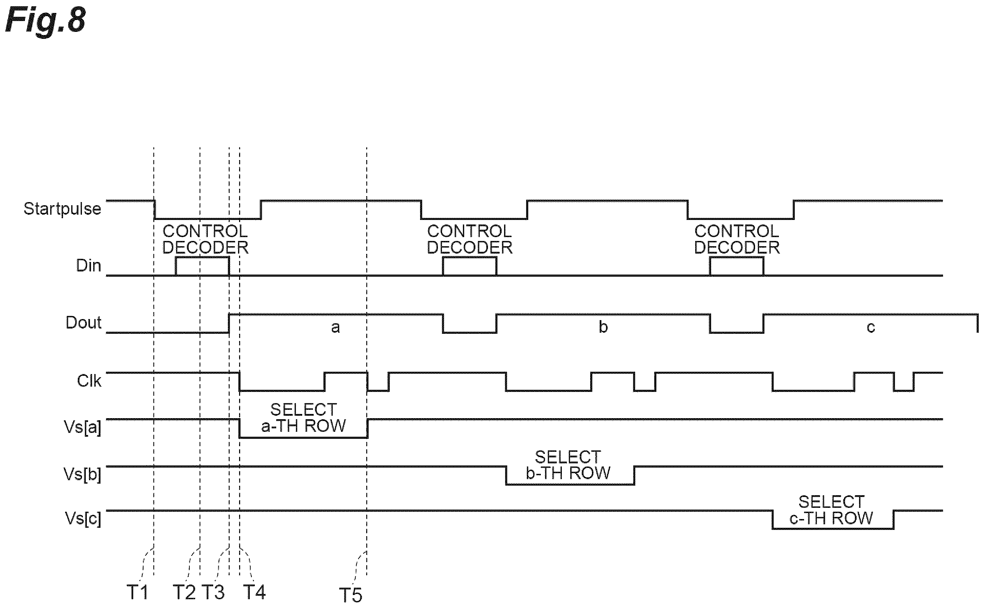

An example of an operation of the row selection circuit 84 will be described with reference to FIG. 8. In FIG. 6 and FIG. 8, row selection signals Vs[a], Vs[b], and Vs[c] are row designation signals for a-th, b-th, and c-th rows, respectively. When the signal for a-th row (when the a-th row is selected), first, the start signal Startpulse is input to the input terminal Start of each multiplexer 843 (T1). Subsequently, while the start signal Startpulse is being input, the row designation signal Din is input to the decoder 841 (T2), and the output signal Dout of the decoder 841 is determined (T3). Subsequently, the clock signal Clk is input to the clk terminal (T4). In this way, the row selection signal Vs[a] of the selected a-th row is at a low level (selected state), and the signal of the a-th row is read. After the signal is read, the clock signal Clk is again input to the clk terminal to cancel selection of the a-th row (T5). This description is similarly applied to the case where signals of the b-th row and the c-th row are read.

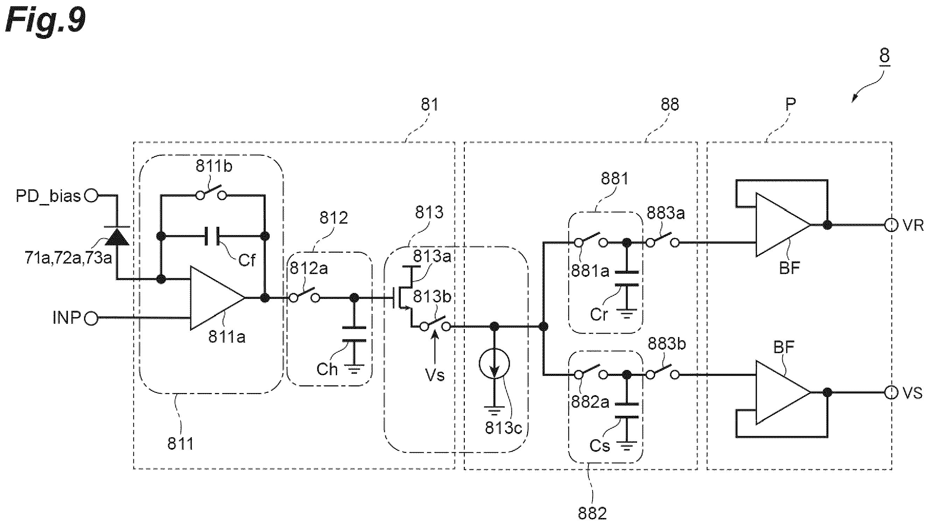

A configuration of the circuit board 8 will be further described with reference to FIG. 9. As illustrated in FIG. 9, each pixel circuit 81 includes a charge amplifier 811 (storage means), a sample hold circuit 812, and a part of a source follower circuit 813. The remaining part of the source follower circuit 813 is included in the signal processing circuit 88.

The charge amplifier 811 includes an operational amplifier 811a, a capacitor Cf connected between a first input terminal and an output terminal of the operational amplifier 811a, and a reset switch 811b connected in parallel to the capacitor Cf. The first input terminal of the operational amplifier 811a is connected to an anode of one of the photodetection portions 71a, 72a, and 73a. A bias voltage PDbias is input to a cathode of one of the photodetection portions 71a, 72a, and 73a. A voltage INP is input to a second input terminal of the operational amplifier 811a. The voltage INP is generated at the second input terminal of the operational amplifier 811a due to a virtual short circuit of the operational amplifier 811a. Therefore, the second input terminal has the same potential as that of the anode of each of the photodetection portions 71a, 72a, and 73a. The voltage INP is set to a voltage higher than the bias voltage PDbias so that all the photodetection portions 71a, 72a, and 73a are not forward biased. Electric charges generated in the photodetection portions 71a, 72a, and 73a are stored in the capacitor Cf. The charge amplifier 811 outputs a voltage signal according to a quantity of the stored electric charges. The reset switch 811b is turned on and off by the control circuit 86. When the reset switch 811b is turned on, the electric charges stored in the capacitor Cf are reset. In this example, the reset switches 811b of all the pixel circuits 81 (including the non-connected pixel circuits 82) are collectively turned on and off. That is, the reset switch 811b is provided as a common reset switch for all the pixel circuits 81.

The sample hold circuit 812 includes a sampling switch 812a and a capacitor Ch. A first terminal of the sampling switch 812a is connected to the output terminal of the operational amplifier 811a. The other terminal of the sampling switch 812a is connected to the capacitor Ch. The sampling switch 812a is turned on and off by the control circuit 86.

The source follower circuit 813 includes a transistor 813a, a row selection switch 813b, and a constant current source 813c. In the example of FIG. 9, the transistor 813a is an NMOS-FET. A gate terminal of the transistor 813a is connected to a second terminal of the sampling switch 812a. A source terminal of the transistor 813a is connected to a first terminal of the row selection switch 813b. The constant current source 813c is connected to a second terminal of the row selection switch 813b. In this example, the constant current source 813c is provided in the signal processing circuit 88. The row selection switch 813b is turned on and off by a row selection signal Vs from the row selection circuit 84.

Each signal processing circuit 88 includes a part of the source follower circuit 813 (constant current source 813c), a reset hold circuit 881, and a sample hold circuit 882. The reset hold circuit 881 holds a reset output signal output from the pixel circuit 81. The reset hold circuit 881 includes a sampling switch 881a and a capacitor Cr. A first terminal of the sampling switch 881a is connected to the second terminal of the row selection switch 813b. A second terminal of the sampling switch 881a is connected to a buffer amplifier BF of the output port P described above via a column selection switch 883a. The column selection switch 883a is turned on and off by a column selection signal HSR. When the column selection switch 883a is turned on, a reset output signal is output from the buffer amplifier BF.

The sample hold circuit 882 holds a voltage signal output from the pixel circuit 81. The sample hold circuit 882 includes a sampling switch 882a and a capacitor Cs. A first terminal of the sampling switch 882a is connected to the second terminal of the row selection switch 813b. A second terminal of the sampling switch 882a is connected to the buffer amplifier BF of the output port P via a column selection switch 883b. The column selection switch 883b is turned on and off by the column selection signal HSR. When the column selection switch 883b is turned on, a voltage signal is output from the buffer amplifier BF.

A flow of a signal in the circuit board 8 will be described. First, when the reset switch 811b is turned off, the charge amplifier 811 converts electric charges accumulated in the capacitor Cf into a voltage signal. Subsequently, the sampling switch 812a is turned on, and the voltage signal is transferred to and accumulated in the capacitor Ch. Subsequently, after the sampling switch 812a is turned off, the row selection switch 813b is turned on, and the voltage signal held in the capacitor Ch is transferred to the signal processing circuit 88 via the source follower circuit 813. In this instance, when the sampling switch 882a is turned on, the voltage signal is transferred to the sample hold circuit 882 and held in the capacitor Cs. Thereafter, the sampling switch 882a is turned off.

Subsequently, when the sampling switch 881a is turned on while the reset switch 811b and the sampling switch 812a are in an on state, the reset output signal of the pixel circuit 81 is transferred to and accumulated in the capacitor Cr of the reset hold circuit 881. Subsequently, after the sampling switch 881a is turned off, when the column selection switches 883a and 883b are turned on by the column selection signal HSR, the reset output signal VR and the voltage signal VS are output via the buffer amplifier BF. During signal processing, a difference between the reset output signal VR and the voltage signal VS is used as an actual output signal. By taking the difference between the reset output signal VR and the voltage signal VS, it is possible to eliminate an influence of variation in characteristics of the charge amplifier 811 and the source follower circuit 813, and it is possible to improve uniformity.

As described above, in this example, since the reset switches 811b of all the pixel circuits 81 including the non-connected pixel circuits 82 are collectively turned on and off, when the reset switches 811b are turned on in the above process, not only are the capacitors Cf of the charge amplifiers 811 of the pixel circuits 81 electrically connected to the photodetection substrates 71 to 73 reset, but also the capacitors Cf of the non-connected pixel circuits 82 not electrically connected to the photodetection substrates 71 to 73 are also reset. In other words, the capacitors Cf of the charge amplifiers 811 of the non-connected pixel circuits 82 are reset when the capacitors Cf of the pixel circuits 81 are reset.

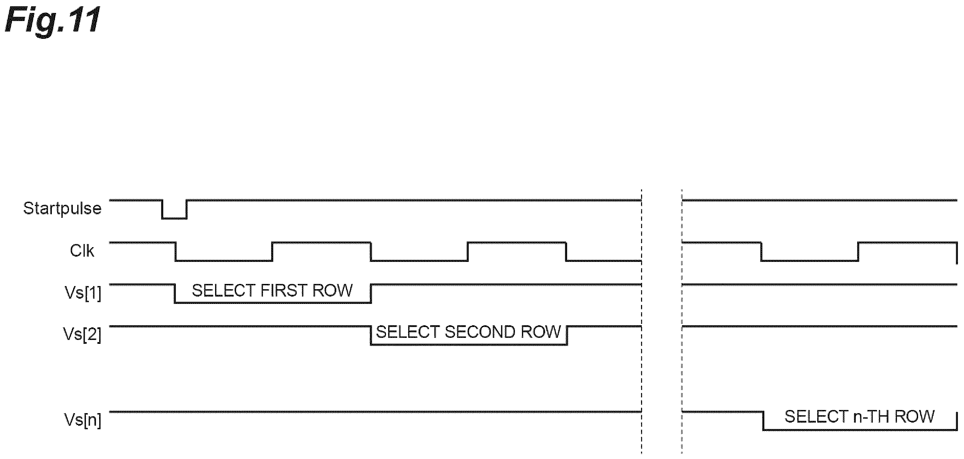

Next, an operation in the sequential reading mode in which the row selection circuit 84 is in the second state will be described with reference to FIG. 10 and FIG. 11. As described above, in this case, the rows of the pixel circuits 81 are selected in sequence according to an arrangement order in the Y-direction. In FIG. 10, a first row, a second row, and an nth row (for example, the last row, 256th row) are illustrated. As illustrated in FIG. 10, in the second state, the mode changeover switches 842 are not connected to the decoder 841. A high-level signal is input to the input terminal Sadd of the multiplexer 843 in the first row, and a low-level signal is input to each of the input terminal Eadd of the multiplexer 843 in the first row and the input terminals Sadd and Eadd of the multiplexers 843 in rows other than the first row.

As illustrated in FIG. 11, in the sequential reading mode, the start signal Startpulse is sequentially shifted by inputting the clock signal Clk to the clk terminal. This operation is similar to that of a normal shift register. In the sequential reading mode, when the input terminal Sadd of the multiplexer 843 in the first row is at a high level, the start signal Startpulse is active only in the first row, and the start signal Startpulse is input only to the first row. Since the input terminal Sadd is at a low level in a row other than the first row, the start signal Startpulse is not active, and the input terminal Qpre passes the row selection signal Vs without change.

### [Action and Effect]

In the photodetector 9, the first photodetection substrate 71, the second photodetection substrate 72, and the third photodetection substrate 73 (the plurality of photodetection substrates 7) having sensitivities in mutually different wavelength ranges are placed on the circuit board 8, and the photodetection substrates 71 to 73 include the plurality of photodetection portions 71a to 73a arranged in the X-direction (row direction) and the-Y-direction (column direction). In addition, the photodetection substrates 71 to 73 are placed on the circuit board 8 so as to be aligned in the-Y-direction. In this way, for example, 2D image information for each wavelength can be acquired by causing the light Lt dispersed in the Y-direction by the spectroscopic portion 6 to enter the photodetection portions 71a to 73a (by arranging the photodetector 9 so that the Y-direction becomes a spectral direction). In addition, in the photodetector 9, the row selection circuit 84 that selects a row from which a signal is read from among the plurality of pixel circuits 81 are configured to be able to select any row from among the plurality of rows of the plurality of pixel circuits 81. In this way, it is possible to read signals from pixel circuits 81 in a necessary row while not reading signals from pixel circuits 81 in an unnecessary row. In hyperspectral imaging, inspection, etc. can be performed using only a detection result for a specific wavelength range. For this reason, by reading only signals from the pixel circuits 81 in the necessary row, it is possible to increase a processing speed when compared to, for example, the case where the pixel circuits 81 in all rows are read in sequence. Therefore, according to the photodetector 9, it is possible to increase a processing speed of hyperspectral imaging.

The control circuit 86 controls the row selection circuit 84 so that signals are read from a plurality of pixel circuits 81 in a row corresponding to input, while signals are not read from a plurality of pixel circuits 81 in a row other than the row corresponding to the input. In this way, for example, it is possible to increase a processing speed when compared to, for example, the case where the pixel circuits 81 in all the rows are read in sequence.

The second photodetection substrate 72 is adjacent to the first photodetection substrate 71 with the first gap D1 in the Y-direction. In addition, the third photodetection substrate 73 is adjacent to the second photodetection substrate 72 with the second gap D2 in the Y-direction. In this way, for example, a processing speed can be further increased by arranging the photodetector 9 so that light Lt in a wavelength range not required for inspection, among the light Lt dispersed in the Y-direction by the spectroscopic portion 6, enters the first gap D1 and the second gap D2. In addition, the photodetection substrates 71 to 73 can be made smaller, and manufacture can be facilitated.

In the circuit board 8, a plurality of non-connected pixel circuits 82 not electrically connected to the photodetection substrates 71 to 73 is arranged in a region of the circuit board 8 that overlaps with the first gap D1 and the second gap D2 when viewed in the thickness direction (Z-direction) of the circuit board 8. In this way, for example, it is possible to change arrangement of the photodetection substrates 71 to 73 so that the photodetection portions 71a to 73a are electrically connected to the non-connected pixel circuits 82, and to increase a degree of freedom.

The capacitor Cf of the non-connected pixel circuit 82 is reset when the capacitor Cf of the pixel circuit 81 is reset. Since the photodetection portions 71a to 73a are not connected to the non-connected pixel circuit 82, no signal is accumulated therein. However, there is a case in which electric charges generated at a PN junction due to entrance of the light Lt are accumulated therein. In this case, there is concern that the electric charges may act as a parasitic capacitor and affect the surrounding pixel circuits 81. In this regard, in the photodetector 9, when the capacitor Cf of the pixel circuit 81 is reset, the capacitor Cf of the non-connected pixel circuit 82 is reset, so that it is possible to suppress an influence of the electric charges accumulated in the non-connected pixel circuit 82 on the surrounding pixel circuits 81. Note that, in the pixel circuits 81 electrically connected to the photodetection portions 71a to 73a, the light Lt traveling toward the pixel circuits 81 is blocked by the photodetection portions 71a to 73a.

The column reading circuit 85 includes a plurality of output ports P electrically connected to mutually different columns of the plurality of pixel circuits 81. In this way, it is possible to improve a signal reading speed.

The number of pixel circuits 81 arranged in the X-direction is greater than the number of pixel circuits 81 arranged in the Y-direction. In this way, it is possible to improve a signal reading speed.

Each pixel circuit 81 includes the charge amplifier 811 electrically connected to one of the photodetection portions 71a to 73a. In this way, it is possible to convert electric charges generated in the photodetection portions 71a to 73a into a voltage signal by the charge amplifier 811.

The row selection circuit 84 is configured to be able to switch between the first state in which any row can be selected from among the plurality of rows of the pixel circuits 81, and the second state in which the plurality of rows of the pixel circuits 81 are selected in sequence according to an arrangement order in the Y-direction. In this way, it is possible to switch states of the row selection circuit 84 depending on the use, etc.

A part of the first wavelength range of the first photodetection substrate 71 overlaps with the second wavelength range of the second photodetection substrate 72. In this way, it is possible to realize the photodetector 9 not having a wavelength range in which detection sensitivity significantly drops while obtaining a wide detection wavelength range. In addition, a part of the second wavelength range of the second photodetection substrate 72 overlaps with the third wavelength range of the third photodetection substrate 73. In this way, it is possible to realize the photodetector 9 not having a wavelength range in which detection sensitivity significantly drops while obtaining a wide detection wavelength range.

In the camera 2, the spectroscopic portion 6 disperses the light Lt in the Y-direction. That is, the photodetector 9 is arranged so that the Y-direction becomes the spectral direction. Further, in the photodetector 9, the row selection circuit 84 that selects a row from which a signal is read from among the plurality of pixel circuits 81 are configured to be able to select any row from among the plurality of rows of the plurality of pixel circuits 81. In this way, it is possible to read signals from pixel circuits 81 in a necessary row while not reading signals from pixel circuits 81 in an unnecessary row. In hyperspectral imaging, inspection, etc. can be performed using only a detection result for a specific wavelength range. For this reason, by reading only signals from pixel circuits 81 in a necessary row, it is possible to increase a processing speed when compared to, for example, the case where the pixel circuits 81 in all rows are read in sequence. Therefore, according to the camera 2, it is possible to increase a processing speed of hyperspectral imaging. Moreover, according to the imaging system 1 including the camera 2, for a similar reason, it is possible to increase a processing speed of hyperspectral imaging. In addition, since the photodetector 9 of the imaging system 1 can read only signals from pixel circuits 81 in a necessary row, it is possible to process the light Lt from the object B conveyed in the Y-direction by the conveying device 3 at high speed.

In the camera 2, the light Lt passing through the slit 5a extending in the X-direction enters the spectroscopic portion 6. In this way, it is possible to cause the light Lt to favorably enter the spectroscopic portion 6.

### [Modified example]

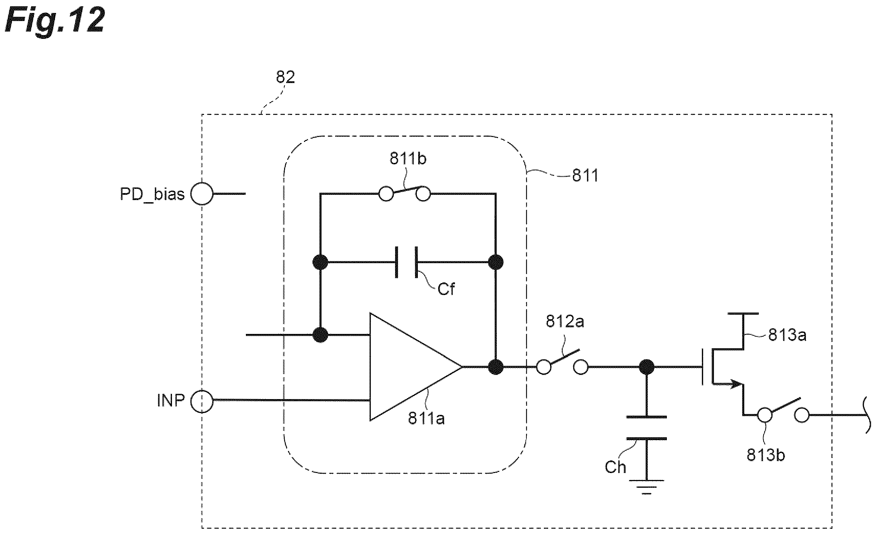

As in a first modified example illustrated in FIG. 12, the reset switch 811b of the non-connected pixel circuit 82 in which the first input terminal of the operational amplifier 811a is not connected to the photodetection portions 71a, 72a, and 73a may be always in an on state. In this case, the capacitor Cf of the non-connected pixel circuit 82 is constantly in a reset state. Similarly to the embodiment, such a first modified example can increase a processing speed of hyperspectral imaging. In addition, since the capacitor Cf of the non-connected pixel circuit 82 is constantly in a reset state, an influence of the electric charges accumulated in the non-connected pixel circuit 82 on the surrounding pixel circuits 81 can be more reliably suppressed.

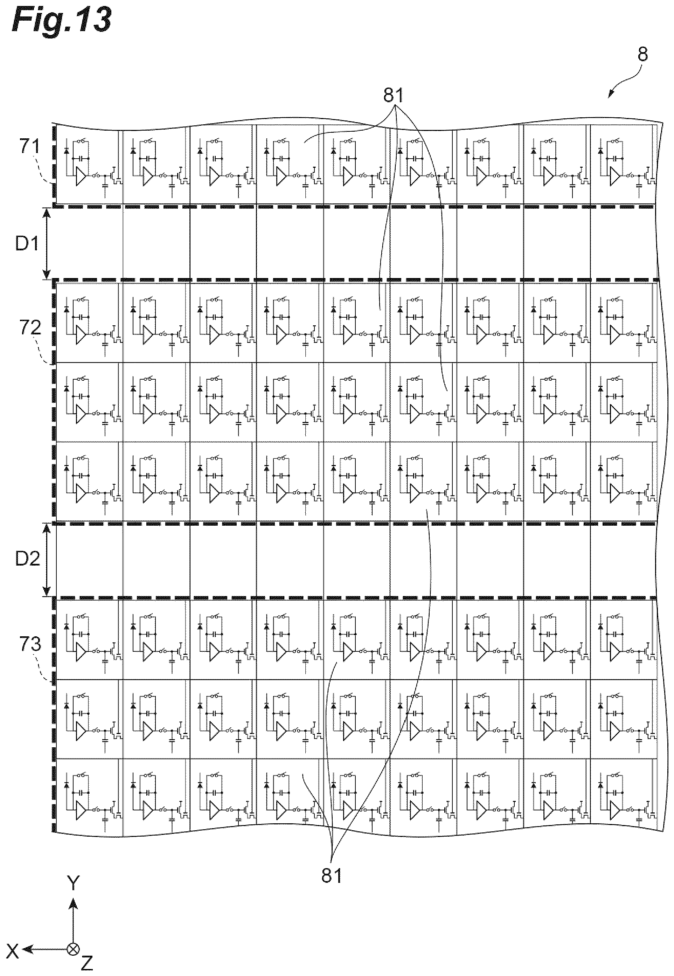

As in a second modified example illustrated in FIG. 13, the pixel circuit 81 does not have to be arranged in a region overlapping with the first gap D1 and a region overlapping with the second gap D2 when viewed in the Z-direction on the circuit board 8. That is, the pixel circuit 81 does not have to include the non-connected pixel circuit 82. Similarly to the above embodiment, such a second modified example can increase a processing speed of hyperspectral imaging. In addition, for example, when compared to the case where the non-connected pixel circuit 82 is arranged in the region, it is possible to reduce the amount of current supplied to the pixel circuit 81, and to suppress heat generation in the pixel circuit 81. In addition, by suppressing heat generation in the pixel circuit 81, it is possible to suppress generation of dark current in the photodetection substrates 71 to 73.

The disclosure is not limited to the above-described embodiment and modified examples. For example, materials and shapes of each component are not limited to the above-described material and shape, and various materials and shapes can be adopted.

In the embodiment or the second modified example, the length of the first gap D1 in the Y-direction may be different from the length of the second gap D2 in the Y-direction. In this case, for example, a processing speed can be further increased by arranging the photodetector 9 so that light Lt in a wavelength range not required for inspection, in the light Lt dispersed in the Y-direction by the spectroscopic portion 6, enters the second gap D2. In addition, the photodetection substrates 71 to 73 can be made smaller, and manufacture can be facilitated.

In the embodiment, the row selection circuit 84 is configured to be able to switch between the first state in which any row can be selected from among the plurality of rows of the plurality of pixel circuits 81, and the second state in which the plurality of rows of the plurality of pixel circuits 81 are selected in sequence according to an arrangement order in the Y-direction. However, the row selection circuit 84 does not have to be configured to be able to switch states. For example, the mode changeover switch 842 may be omitted so that the row selection circuit 84 is always in the first state. In this case, the multiplexer 843 and the D flip-flop 844 may be omitted, and the row selection circuit 84 may only include the decoder 841.

The reset hold circuit 881, the column selection switch 883a, and the buffer amplifier BF connected to the column selection switch 883a may be omitted. In this case, it is possible to reduce power consumption and improve a frame rate (reduce an operation time of the reset hold circuit 881). Pixel circuits 81 in a plurality of rows may be assigned to one wavelength. In this case, signals from a plurality of rows may be added (binned) after being read. A transimpedance amplifier may be used instead of the charge amplifier 811.

In the embodiment, three photodetection substrates 7 are provided. However, only two photodetection substrates 7 (for example, the first photodetection substrate 71 and the second photodetection substrate 72) may be provided, or four or more photodetection substrates 7 may be provided. Only one photodetection substrate 7 may be provided. The photodetection substrate 7 and the circuit board 8 may be integrated into a monolithic configuration. The three photodetection substrates 7 may be placed on the circuit board 8 without a gap in the Y-direction.

The column reading circuit 85 may include only one output port P. Arrangement of the pixel circuits 81 is not limited to the above example. For example, the number of pixel circuits 81 arranged in the X-direction may be the same as or smaller than the number of pixel circuits 81 arranged in the Y-direction. The first to third wavelength ranges of the first to third photodetection substrates 71 to 73 do not need to overlap with each other. The slit portion 5 (slit 5a) may be omitted.

In the above embodiment, the imaging system 1 is used for food sorting. However, hyperspectral imaging can be used for foreign object inspection, plastic sorting, component analysis of objects, resource search, etc. That is, the object B may be another object such as plastic. For example, when hyperspectral imaging is used for resource search, a camera including the photodetector 9 may be mounted on a drone (flying vehicle). That is, during capturing in hyperspectral imaging, the object B and the camera may relatively move, and the object B may be moved as in the embodiment, or the camera may be moved.

### Reference Signs List

1: imaging system, 2: camera, 3: conveying device, 4: light entrance portion, 5a: slit, 6: spectroscopic portion, 7: photodetection substrate, 8: circuit board, 9: photodetector, 71: first photodetection substrate, 72: second photodetection substrate, 73: third photodetection substrate, 81: pixel circuit, 82: non-connected pixel circuit, 84: row selection circuit, 85: column reading circuit, 86: control circuit (controller), 811: charge amplifier, Cf: capacitor, D1: first gap, D2: second gap, Lt: light.

## Claims

1. A photodetector comprising:
a plurality of photodetection substrates having sensitivities in mutually different wavelength ranges; and
a circuit board on which the plurality of photodetection substrates are placed, wherein:
each of the plurality of photodetection substrates includes a plurality of photodetection portions arranged in a row direction and a column direction perpendicular to the row direction,
the plurality of photodetection substrates are placed on the circuit board so as to be aligned in the column direction,
the circuit board includes:
a plurality of pixel circuits arranged in the row direction and the column direction and electrically connected to the plurality of photodetection portions, respectively,
a row selection circuit for selecting a row from which signals are read from among the plurality of pixel circuits, and
a column reading circuit for reading signals from the plurality of pixel circuits in the row selected by the row selection circuit for each column, and
the row selection circuit is configured to be able to select any row from among a plurality of rows of the plurality of pixel circuits.

2. The photodetector according to claim 1, further comprising a controller,
wherein the controller controls the row selection circuit so that signals are read from the plurality of pixel circuits in a row corresponding to input, while signals are not read from the plurality of pixel circuits in a row other than the row corresponding to the input.

3. The photodetector according to claim 1 or 2, wherein:
the plurality of photodetection substrates include a first photodetection substrate and a second photodetection substrate, and
the second photodetection substrate is adjacent to the first photodetection substrate in the column direction with a first gap therebetween.

4. The photodetector according to claim 3, wherein a plurality of non-connected pixel circuits not electrically connected to the plurality of photodetection substrates are arranged in a region of the circuit board overlapping with the first gap when viewed in a thickness direction of the circuit board.

5. The photodetector according to claim 4, wherein capacitors of the plurality of non-connected pixel circuits are reset when capacitors of the plurality of pixel circuits are reset.

6. The photodetector according to claim 4, wherein capacitors of the plurality of non-connected pixel circuits are constantly in a reset state.

7. The photodetector according to claim 3, wherein no pixel circuit is arranged in a region of the circuit board overlapping with the first gap when viewed in a thickness direction of the circuit board.

8. The photodetector according to claim 3, wherein:
the plurality of photodetection substrates further include a third photodetection substrate,
the third photodetection substrate is adjacent to the second photodetection substrate in the column direction with a second gap therebetween, and
a length of the first gap in the column direction is different from a length of the second gap in the column direction.

9. The photodetector according to any one of claims 1 to 8, wherein the column reading circuit includes a plurality of output ports electrically connected to mutually different columns of the plurality of pixel circuits.

10. The photodetector according to any one of claims 1 to 9, wherein the number of the plurality of pixel circuits arranged in the row direction is greater than the number of the plurality of pixel circuits arranged in the column direction.

11. The photodetector according to any one of claims 1 to 10, wherein each of the plurality of pixel circuits includes a charge amplifier electrically connected to one of the plurality of photodetection portions.

12. The photodetector according to any one of claims 1 to 11, wherein the row selection circuit is configured to be switchable between a first state in which any row is selectable from among a plurality of rows of the plurality of pixel circuits, and a second state in which a plurality of rows of the plurality of pixel circuits are selected in sequence according to an arrangement order in the column direction.

13. The photodetector according to any one of claims 1 to 12, wherein:
the plurality of photodetection substrates include a first photodetection substrate having sensitivity in a first wavelength range and a second photodetection substrate having sensitivity in a second wavelength range, and
a part of the first wavelength range overlaps with the second wavelength range.

14. A camera comprising:
a light entrance portion;
a spectroscopic portion configured to disperse light entering from the light entrance portion; and
a photodetector that detects the light dispersed by the spectroscopic portion, wherein:
the photodetector includes:
a plurality of photodetection portions arranged in a row direction and a column direction perpendicular to the row direction,
a plurality of pixel circuits arranged in the row direction and the column direction and electrically connected to the plurality of photodetection portions, respectively,
a row selection circuit for selecting a row from which signals are read from among the plurality of pixel circuits, and
a column reading circuit for reading signals from the plurality of pixel circuits in the row selected by the row selection circuit for each column,
the row selection circuit is configured to be able to select any row from among a plurality of rows of the plurality of pixel circuits, and
the spectroscopic portion disperses the light in the column direction.

15. The camera according to claim 14, further comprising a slit extending in the row direction,
wherein the light passing through the slit enters the spectroscopic portion.

16. The camera according to claim 14 or 15, wherein:
the photodetector includes a plurality of photodetection substrates having sensitivities in mutually different wavelength ranges, and a circuit board on which the plurality of photodetection substrates are placed,
each of the plurality of photodetection substrates includes a plurality of photodetection portions arranged in the row direction and the column direction,
the plurality of photodetection substrates are placed on the circuit board so as to be aligned in the column direction, and
the circuit board includes the plurality of pixel circuits, the row selection circuit, and the column reading circuit.

17. An imaging system comprising:
the camera according to any one of claims 14 to 16; and
a conveying device that conveys an object in the column direction,
wherein light from the object being conveyed by the conveying device enters the light entrance portion.
